# EUROPEAN PATENT APPLICATION

(11) **EP 4 703 297 A1**
(43) Date of publication of application: **04.03.2026**
(21) Application number: 24198300.6
(22) Date of filing: 03.09.2024
(51) Int. Cl.: B65G 1/04, A62C 3/00

(54) **AN AUTOMATED STORAGE AND RETRIEVAL SYSTEM**

(71) Applicant: AutoStore Technology AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to an automated storage and retrieval system comprising a frame, a fire suppression unit, and a control system. The frame defines storage columns for receiving storage containers. The fire suppression unit is positioned to deliver fire suppressant into storage columns. The fire suppression unit comprises a nozzle and an actuatable mount. The control system is configured to instruct the fire suppression unit to direct the nozzle to the target storage column and to output fire suppressant towards the target storage column.

## Description

### TECHNICAL FIELD

The disclosure relates to an automated storage and retrieval system. More particularly, it relates to an automated storage and retrieval system including at least one fire suppression unit, and a method of delivering fire suppressant to an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

As a safety measure, warehouses usually include fire detection and suppression systems. Detection systems detect conditions indicative of fire in the warehouse, such as smoke or heat. In response, the detection systems trigger alarms and/or fire suppression systems. Traditional warehouse fire suppression systems involve ceiling sprinklers supplying fire suppressant downward into the warehouse. In Europe, the configuration and operation of these ceiling sprinklers are governed by European standard EN 12845:2015, which prescribes a maximum clearance from a storage location and ceiling sprinklers, and minimum storage block and aisle sizes. In addition, when triggered, the alarm may call fire fighters to the warehouse to supply fire suppressant directly onto the fire from the warehouse aisles using a firehose.

However, existing fire suppression systems may not be susceptible to further improvement for automated storage and retrieval systems comprising a three-dimensional grid.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a side view of a section of the system of Fig. 1;
Fig. 5B shows a perspective view of the section of Fig. 5A;
Fig. 6 shows a fire suppression unit and the interactions of the fire suppression unit, robot, and fire detection system with a control system;
Fig. 7 shows a method of delivering fire suppressant to the system of Fig. 1;
Figs. 8A-8C show top views of the system of Fig. 1 annotated to depict respective zones;
Fig. 9 shows storage columns configured to accumulate fire suppressant; and
Figs. 10A-10C show a storage column configured to accumulate fire suppressant.

### DETAILED DESCRIPTION

In overview, the disclosure relates to an automated storage and retrieval system including at least one fire suppression unit positioned to deliver fire suppressant into at least a subset of storage columns of the storage system. Each fire suppression unit can therefore provide fire suppression to storage columns, such as the storage columns nearest to the fire suppression unit. Each fire suppression unit includes a nozzle and an actuatable mount (also referred to as an adjustable mount). The system also includes a control system configured to instruct the fire suppression unit to direct a nozzle thereof to the target storage column and output fire suppressant towards the target storage column. The control system can therefore enable the fire suppression unit to target a particular storage column and then release fire suppressant, from the fire suppression unit, into the target storage column.

Accordingly, an effect of the control system and fire suppression unit(s) of the present disclosure is targeted fire suppressant delivery to specific storage columns in the storage system. By targeting fire suppressant delivery to specific storage columns, the spread of fire suppressant to nearby storage columns, to which fire suppressant need not be delivered, is minimised. As such, goods stored within the nearby storage columns are not damaged by fire suppressant and need not be discarded and replaced after the fire suppression unit(s) are activated. Since the goods need not be discarded and replaced, the control system and fire suppression unit(s) of the present disclosure can provide improvements to fire suppression costs. In addition, targeting fire suppressant to specific storage columns can also provide a quicker fire response by focussing the fire suppressant to the columns containing fire or conditions indicative of fire, thereby reducing the risk of fire spreading into neighbouring columns.

In some examples, the same control system for instructing the fire suppression unit may be further configured to route robotic vehicles (also referred to as robotic container-handling vehicles) about the plurality of storage columns. As such, the control system may be configured to instruct the fire suppression unit to output fire suppressant towards the target storage column after routing the robotic vehicle away from the target storage column. As such, damage to the robotic vehicle caused by fire suppressant can be reduced. In addition, because the control system is configured to instruct the fire suppression unit to output fire suppressant towards the target storage column in response to a signal suggesting fire is present in or around the target storage column, routing the robotic vehicle away from the target storage column can also reduce fire damage to the robotic vehicle.

In some examples, at least one storage column of the plurality of storage columns designates a zone for accumulating the fire suppressant, where the at least one storage column comprises the target storage column. In these examples, fire suppressant may be delivered (from one or more of the fire suppression units) to each storage column designating the zone. The zone may be a group of storage columns in which fire suppressant is to be delivered to suppress fire therein. Alternatively, the zone may be a group of consecutively adjacent storage columns which segregate a portion of the automated storage and retrieval system from another portion of the automated storage and retrieval system. Delivering fire suppressant to each storage column designating the zone can prevent or slow the spread of fire from within the zone to outside the zone and/or from a portion of the storage system to another portion of the storage system. Preventing or slowing the spread of fire can minimise fire damage to goods stored in the storage system and increase the time in which fire fighters can safely respond to an alarm.

### Automated storage and retrieval system overview

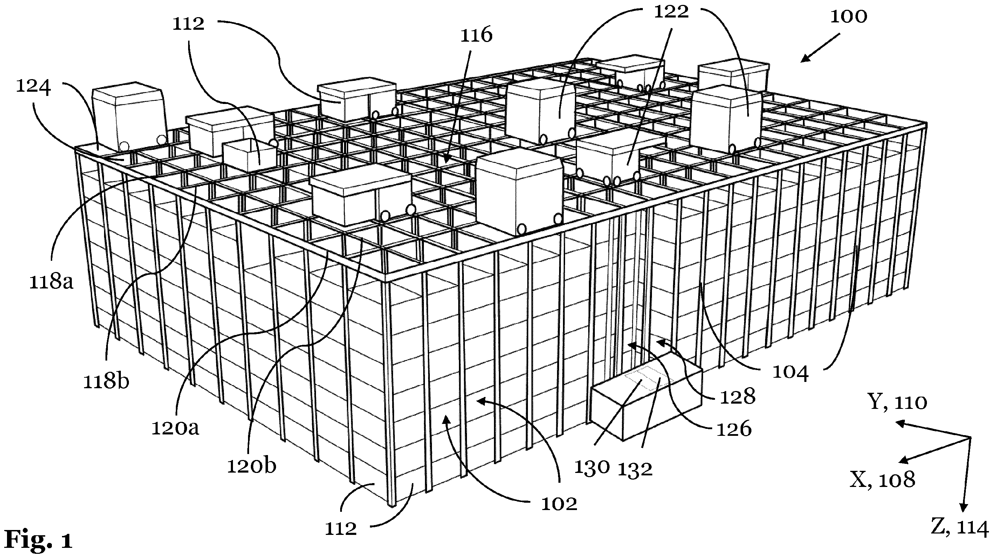

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

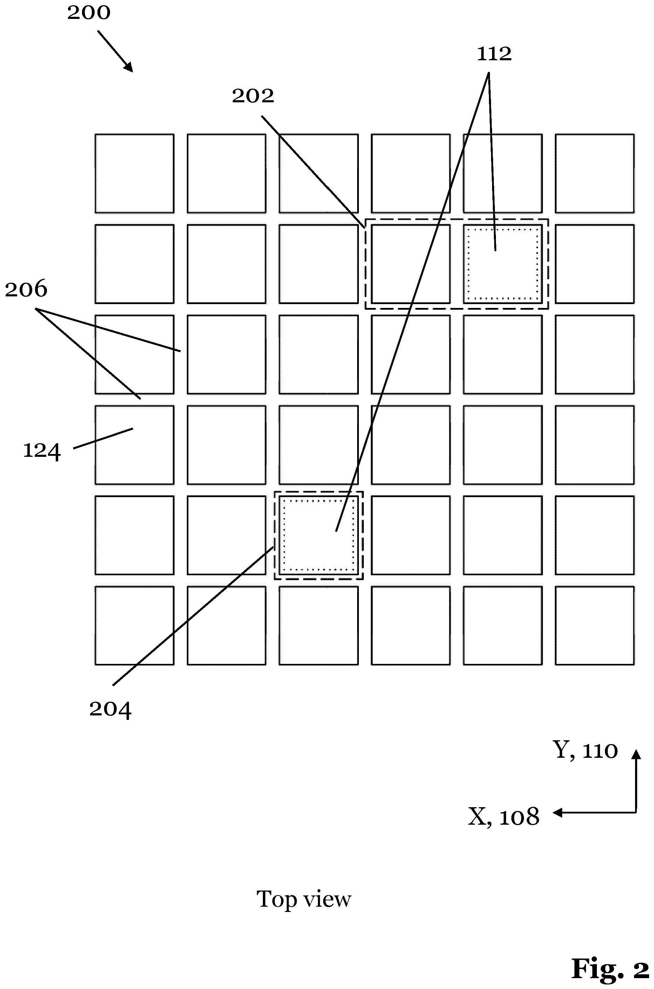

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

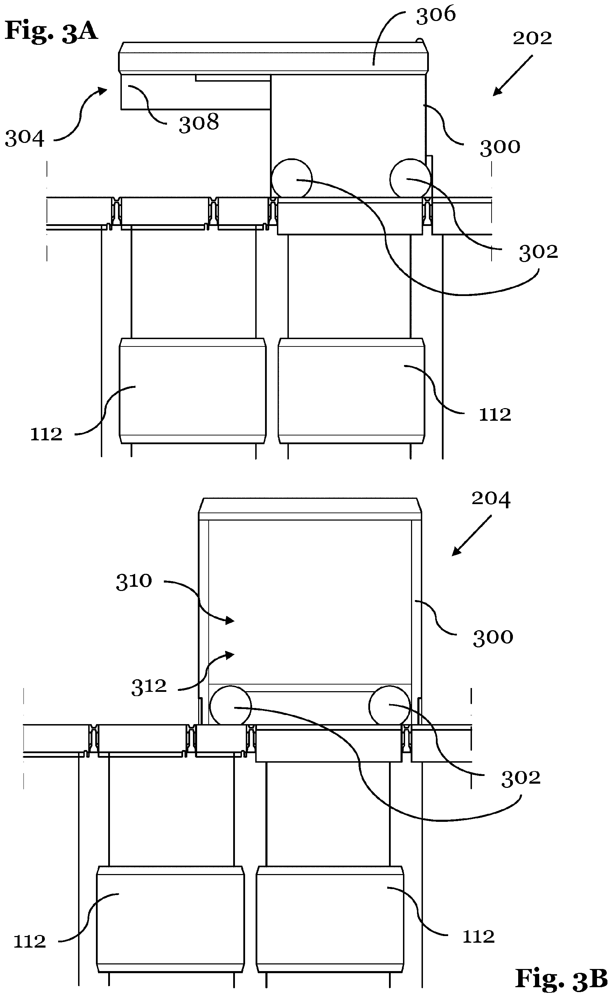

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

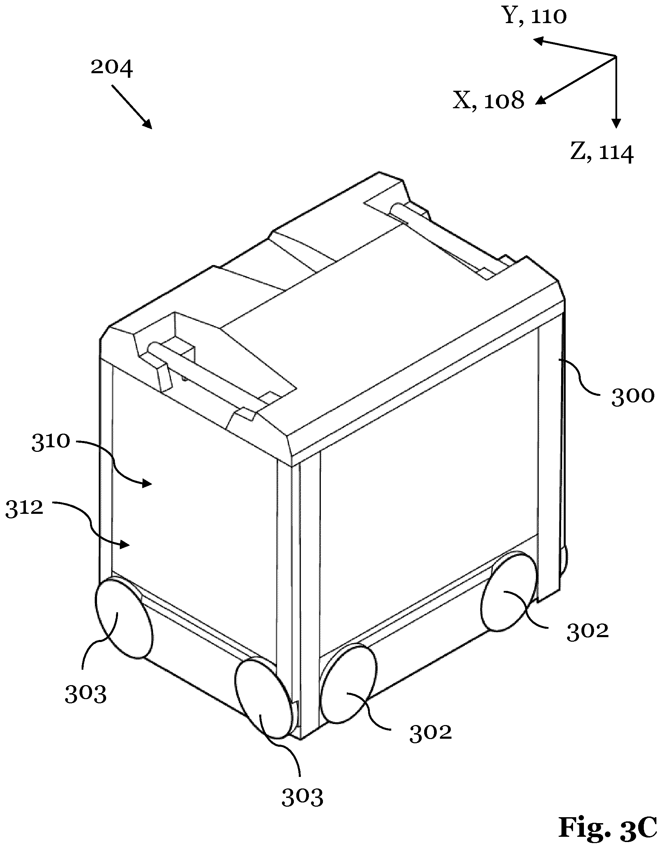

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

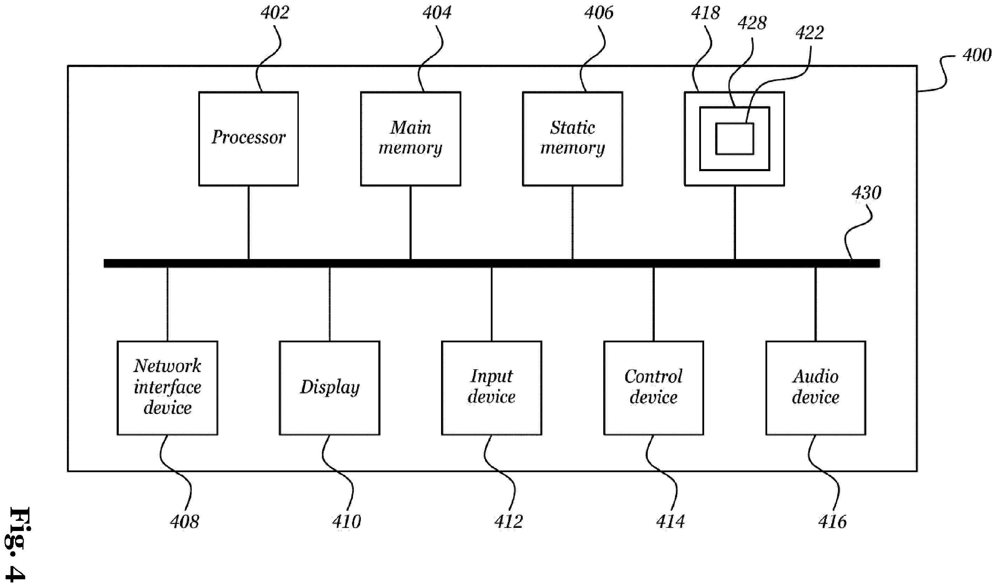

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Specific improvements to fire suppression units

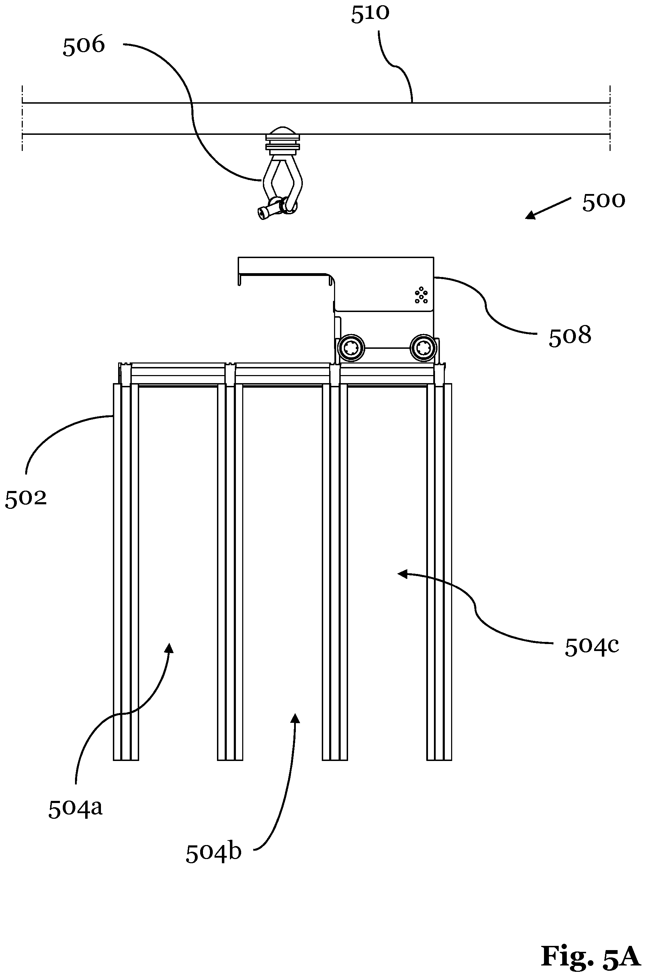

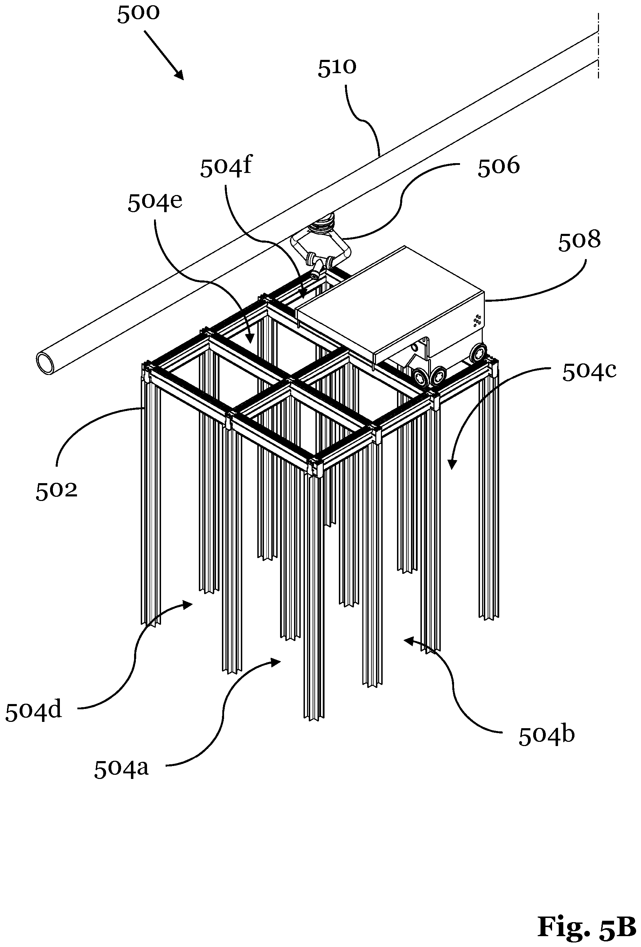

Referring to Figs. 5A and 5B, an exemplary section 500 of the automated storage and retrieval system is respectively depicted in side view and perspective view. The storage system includes a frame 502 defining a plurality of storage columns. The exemplary section 500 shown in Figs. 5A and 5B includes six storage columns 504a, 504b, 504c, 504d, 504e, 504f defined by frame 502. However, other sections may include a greater or lesser number of columns. The section 500 of the storage system depicted in Figs. 5A and 5B may be a section of grid 100 of the automated storage and retrieval system shown in Fig. 1, which includes many more than six storage columns.

As shown in Figs. 5A and 5B, the storage system may include at least one fire suppression unit 506 positioned to deliver fire suppressant into at least a subset of the storage columns of the storage system. A fire suppression unit 506 may be considered positioned to deliver fire suppressant into a storage column if the storage column is within range of fire suppressant output from the fire suppression unit 506. The range of fire suppressant output may depend on, for instance, the available orientations of the fire suppression unit and the fluid output velocity from the fire suppression unit 506. In the depiction of Figs. 5A and 5B, the fire suppression unit 506 is positioned to deliver fire suppressant into the subset of storage columns comprising storage columns 504a, 504b, 504c, 504d, 504e, 504f because the fire suppression unit can be oriented to deliver fire suppressant into any of storage columns 504a, 504b, 504c, 504d, 504e, 504f. The subset of storage columns may additionally include any further adjacent storage columns within range of the fire suppression unit 506.

The example shown in Figs. 5A and 5B also includes a robot 508. The robot 508 is configured to transport containers between the storage columns and may be as described with respect to any of the robots of Figs. 1-3C. In the depicted example, the robot 508 is a cantilever type robot but may equally be an internal cavity type robot. The robot 508 is configured to transport containers between the plurality of storage columns, for instance along the top of the grid, both within and without the section 500 shown in Figs. 5A and 5B.

As shown in Fig. 5B, the fire suppression unit 506 may be positioned above the frame 502 such that fire suppressant can be delivered (e.g., down) into the columns 504a, 504b, 504c, 504d, 504e, 504f, through the access openings above the columns. For instance, the fire suppression unit 506 is positioned above the frame in the stacking direction of the columns 504a, 504b, 504c, 504d, 504e, 504f. Here, the stacking direction is the direction in which storage containers are stacked. For example, the stacking direction is vertical and/or parallel to the elongate direction of the columns. Alternatively, the fire suppression unit 506 may be positioned at any other position from which fire suppressant may be delivered into at a subset of storage columns of the storage system. For instance, the fire suppression unit 506 may be positioned outside of the grid and may be oriented towards the storage columns or the access openings thereof.

To maximise the number of storage columns within range, the fire suppression unit 506 may be positioned above an edge between two storage columns. Here, the edge comprises the shared perimeter of two columns. For instance, as shown in Figs. 5A and 5B, the edge may be along a boundary shared between two storage columns and the fire suppression unit 506 is positioned above the edge formed between storage columns 504b and 504e. The edge may alternatively be a vertex between more than two storage columns (such as the vertex formed between storage columns 504a, 504b, 504d and 504e), in which case the fire suppression unit 506 may be positioned above the vertex. When a fire suppression unit 506 is positioned above an edge, the fire suppression unit is positioned substantially or directly above and parallel to the edge in the stacking direction. Positioning the fire suppression unit 506 above the edge maximises the number of storage columns within range of fire suppressant output by minimising the distance between the fire suppression unit 506 and a greater number of storage columns.

The storage system also includes a supply pipe 510 to supply fire suppressant to the fire suppression unit 506. As depicted in Figs. 5A and 5B, the supply pipe 510 may be located above the frame 502 and above the fire suppression unit 506 to supply fire suppressant to the fire suppression unit 506 from above. However, the supply pipe 510 may equally be located below the fire suppression unit and supply fire suppressant to the fire suppression unit 506 from below (e.g., via a pipe network). In some examples, at least a portion of the supply pipe may be substantially or directly above and parallel to the edge between two storage columns.

The supply pipe 510 contains an internal conduit to allow passage of fire suppressant from a source (not shown) to the fire suppression unit 506. The source may comprise a fire suppressant reservoir containing the fire suppressant to be delivered into the automated storage and retrieval system from the fire suppression unit 506. Alternatively, the source may be external to the automated storage and retrieval system, in which case a network of pipes including the supply pipe 510 may terminate at a hose socket into which the fire suppressant may be supplied by, for instance, firefighting crews. In either embodiment, the fire suppressant may be pressurised in the supply pipe 510 to enable fire suppressant to be passively propelled from the fire suppression unit 506 on opening of a valve in the fire suppressant flow channel of the fire suppression unit 506.

The fire suppressant delivered to the storage system by fire suppression unit 506 may be any agent (liquid, gas, powder, or otherwise) suitable for use in a fire suppression system. The fire suppressant may comprise at least one of: a dry chemical fire suppressant, such as monoammonium phosphate, sodium bicarbonate, potassium bicarbonate, or potassium chloride; a foam fire suppressant, such as aqueous film-forming foam, film-forming fluoroprotein, or compressed air foam; a wet chemical fire suppressant, such as potassium acetate, potassium carbonate, or potassium citrate; a clean fire suppressant (or an inert gas fire suppressant), such as halons, carbon dioxide or inert gas; a dry powder fire suppressant, such as sodium chloride; a condensed aerosol fire suppressant; water; and/or any other suitable fire suppressant. Dry chemical fire suppressant, foam fire suppressant, and dry powder fire suppressant smother fires by forming a barrier between the fuel of the fire and the source of oxygen in the atmosphere. Wet chemical fire suppressant similarly forms a soapy film over the fuel. Clean, or gaseous, fire suppressant and condensed aerosol fire suppressant displace oxygen in the atmosphere surrounding a fire with carbon dioxide or other inert gasses. Water, when used as a fire suppressant, cools burning material. Preferably, the fire suppressant includes a foam fire suppressant.

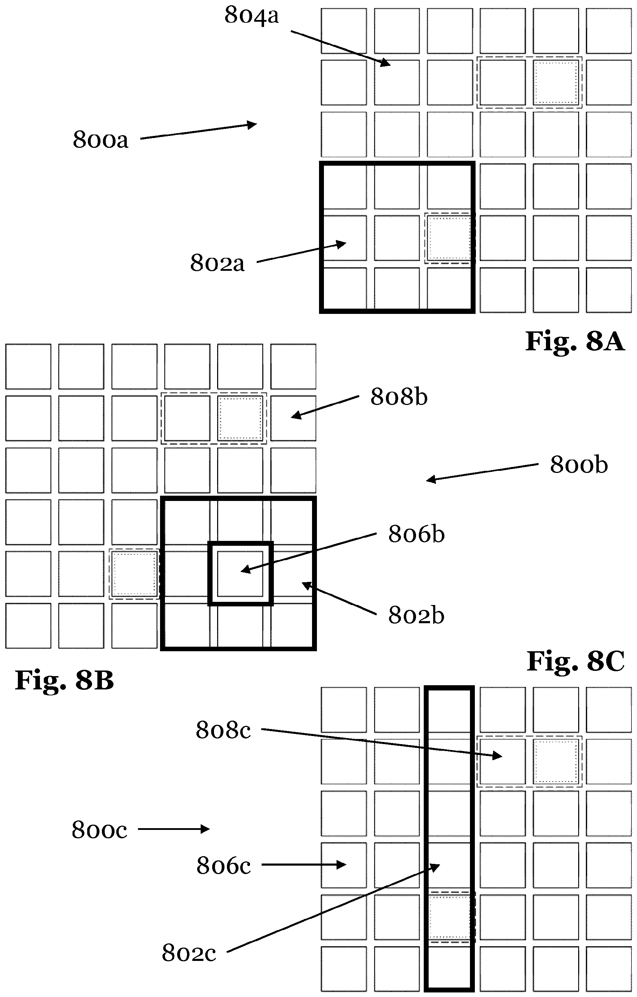

As described above, the section 500 of the automated storage and retrieval system shown in Figs. 5A and 5B may be a section of a wider automated storage and retrieval system, such as that shown in Fig. 1. The wider automated storage and retrieval system may include more than one fire suppression unit 506 of the kind described herein. For instance, at least one fire suppression unit 506 may be provided to deliver fire suppressant into each storage column in the storage system. Alternatively, at least one fire suppression unit 506 may be provided to deliver fire suppressant into each storage column within at least one zone or section of the storage system. As described in more detail herein, particularly with respect to Figs. 8A-10C, each zone of the storage system may comprise the storage columns within which flammable goods are stored. As used herein, goods may be considered flammable if they have a flash point less than 50°C above the ambient temperature in the automated storage and retrieval system, or if their flash point is at or below 60°C, at or below 50°C, at or below 40°C, or at or below 30°C.

A plurality of fire suppression units 506 may be positioned about the storage system, for instance, at recurring intervals above the storage columns. For instance, one fire suppression unit 506 may be provided for every 3 storage containers in one direction along the frame 502 and for every 2 storage containers along another, perpendicular direction along the frame 502. In these examples, the supply pipe 510 may be provided as part of a network of pipes arranged to supply fire suppressant to each fire suppression unit 506.

An effect of positioning a plurality of fire suppression units 506 above the storage system is that fire suppressant can be targeted to specific storage columns in the automated storage and retrieval systems, thereby minimising the number of columns affected by the delivery of fire suppressant, which reduces damage to goods stored therein. Targeting fire suppressant to specific storage columns also enables a quicker early fire response by focussing the fire suppressant to the columns containing fire, thereby reducing the risk of fire spreading into neighbouring columns. the fire suppression unit 506 described herein may be particularly suitable for preventing damage and fire spread in storage columns within a specific zone or portion of the grid. For instance, if a specific zone stores higher value or more flammable goods than are stored in the remainder of the storage system, spread of fire in that zone may have a greater impact.

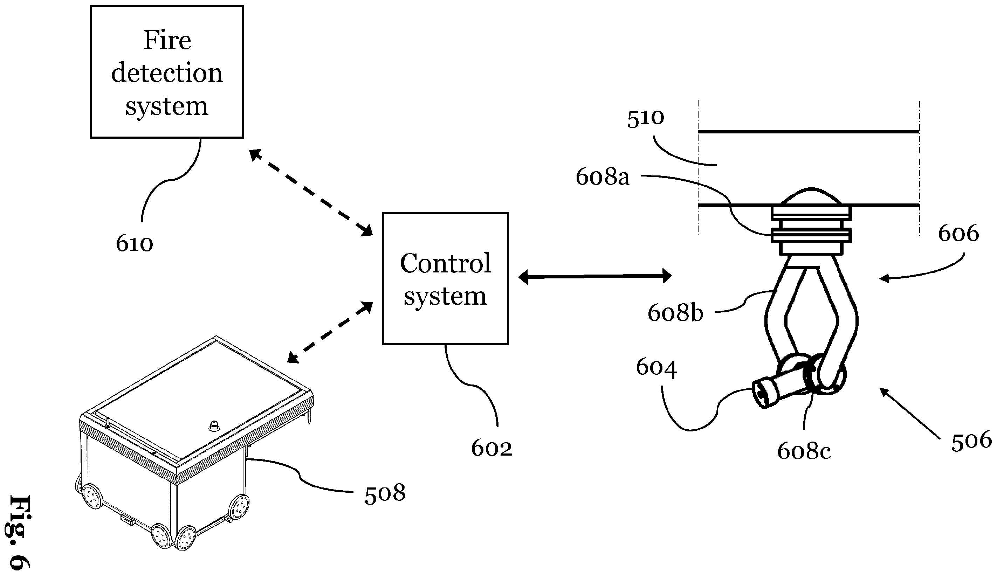

Fig. 6 illustrates the fire suppression unit 506 in more detail, as well as the interaction of the fire suppression unit 506 with a control system 602 and the optional interaction of the control system 602 with a robot 508 and/or a fire detection system 610. As shown in Fig. 6, the fire suppression unit 506 includes a nozzle 604 and an actuatable mount 606. The nozzle 604 is configured to output the fire suppressant and the actuatable mount 606 is configured to direct the nozzle to a target storage column. For instance, on actuation, the actuatable mount is adjustable to reorient the line of sight of the nozzle.

The nozzle 604 is a spout of the fire suppression unit 506 which allows the fire suppression unit 506 to direct and/or disperse fire suppressant output. The nozzle 604 is a fire suppression nozzle, i.e., a nozzle suitable for delivering the fire suppressant. In particular, the nozzle provides a directional delivery of fire suppressant, towards a particular column, referred to as the target column. The target column is the column towards which, in operation, the actuatable mount 606 directs the nozzle. In other words, the target column can be the column within the line of sight of the nozzle 604 during delivery of fire suppressant.

In some examples, the fire suppression nozzle 604 may comprise a spray nozzle. Spray nozzles are arranged to fragment the fluid into droplets and thereby distribute the fluid across a large surface area within the target storage column. Types of spray nozzle include fog nozzles, surface impingement nozzles, misting nozzles, sprinkler heads, and so on. Spray nozzles may fragment the fluid into droplets using dispersion elements at or near their aperture. This allows greater spread of the fire suppressant into the target storage column, which increases the surface area covered by fire suppressant and thereby increases the frame member 502's fire suppression effectiveness.

Preferably, the fire suppression nozzle 604 may preferably be arranged to produce a dense core - also referred to as a tight jet - of high velocity fire suppressant. The tight jet of high velocity fire suppressant has low dispersion compared to spray nozzles. In other words, the spray pattern of the fire suppression nozzle 604 may be a straight stream. To achieve a straight stream, the fire suppression nozzle may include a straight, smooth bore nozzle in combination with a stream shaper to straighten water flow into the bore nozzle. The stream shaper may be a grid stream shaper or a short stream shaper. In these examples, the fire suppression nozzle may be arranged as a water cannon. An effect of fire suppression nozzles 604 with straight stream spray patterns is that fire suppressant can be accurately and directly delivered to a target storage column, substantially without affecting the surrounding storage columns, reducing damage to goods stored in the storage system.

The actuatable mount 606 allows the fire suppression unit 506 to target a storage column by rotation and/or translation. As shown in Fig. 6, the actuatable mount is attached between the nozzle 604 and the supply pipe 510. As such, the actuatable mount is arranged - on actuation - to reorient and/or reposition the nozzle 604 with respect to the supply pipe. As a result, with reference to Figs. 5A and 5B, the actuatable mount 606 can reorient and/or reposition the nozzle 604 with respect to any of the storage columns in range of the fire suppression unit 506. For instance, the actuatable mount of fire suppression unit 506 described with respect to Figs. 5A and 5B reorient and/or reposition the nozzle 604 of the fire suppression unit 506 with respect to storage columns 504a, 504b, 504c, 504d, 504e, 504f. As such, the actuatable mount may reorient and/or reposition the nozzle 604 of the fire suppression unit 506 to direct the nozzle towards (i.e., target) a target storage column.

As shown in the implementation of Fig. 6, the actuatable mount 606 may include a rotatable hub 608a and at least one arm 608b. The rotatable hub 608a is disposed between the arm and the supply pipe 510. The rotatable hub 608a is configured to rotate about an axis of rotation perpendicular to the plane of the grid. In other words, the rotatable hub 608a is configured to rotate about an axis of rotation in the stacking direction of the columns 504b, 504c, 504d, 504e, 504f defined by the frame 502. Accordingly, the rotatable hub is arranged to orient the nozzle 604 in a direction around the plane of the grid.

As shown in Fig. 6, the at least one arm 608b is attached, at its proximal end (e.g., the end closer to the grid), to the nozzle 604 and, at its distal end (e.g., the end further from the grid) to the rotatable hub 608a. In the implementation shown in Fig. 6, two arms are provided and arranged to retain the nozzle 604 therebetween. However, in other implementations any number of arms may be provided. For instance, one arm may be unilaterally attached to the nozzle, or three arms may be arranged to retain the nozzle 604 therebetween. In effect, the arm 508b acts to separate the nozzle 604 from the supply pipe 510 and to reduce the distance between the nozzle 604 and the storage columns. This can increase the accuracy of fire suppression output from the nozzle 604 to a target storage column. The arms 608b can also stabilise the nozzle and/or provide a conduit for fire suppressant between the supply pipe 510 and the nozzle 604.

Any of the arms may be retractable to vary the distance between the nozzle 604 and the storage columns. Retractable arms allow the nozzle to be deployed towards the storage columns when needed, without otherwise interfering with the operation of the robots on the rails of the storage system. As an example, in some implementations, the arms may be telescopically retractable. Alternatively, the arms may be retractable by actuatable elbow joints along the arms.

Any of the arms may also be hinged at either an elbow joint along the arms and/or at the attachment between the arms and the rotatable hub 608a (not shown in Fig. 6). By actuation of either such hinge, the arms may be arranged to translate (laterally) across the storage columns, in the plane of the grid. Such translation repositions the nozzle 604 with respect to the storage columns, thereby increasing the number of storage columns within range of fire suppressant output and therefore increasing the number of storage columns to which the fire suppression unit can deliver fire suppressant.

In some implementations, each arm is attached to the nozzle via a rotatable strut 608c. For instance, as shown in Fig. 6, two arms may be arranged to retain the nozzle 604 therebetween via a rotatable strut 608c. The rotatable strut 608c has an axis of rotation perpendicular to the axis of rotation of the rotatable hub. Accordingly, the axis of rotation of the rotatable strut 608c is parallel or substantially parallel to the plane of the grid.

As further shown in Fig. 6, the storage system further comprises a control system 602. In some implementations, the control system 602 may be a computing device, such as the computing device described with respect to Fig. 4.

The control system 602 is configured to operate the fire suppression unit(s) 506. The control system 602 is configured to control both the nozzle 604 and the actuatable mount 606 of each fire suppression unit via communication. Accordingly, the control system 602 is arranged to communicate with each fire suppression unit. For instance, the control system 602 may include a transmitter arranged to wirelessly emit a signal and the fire suppression unit 506 may include a cooperating receiver arranged to receive the signal from the transmitter. Alternatively, the control system 602 may communicate with the fire suppression unit 506 through wired communication channels. For instance, the control system 602 may be in communication with the fire suppression unit(s) over a Local Area Network (LAN), such as via Ethernet cables or copper wire. Alternatively, the control system 602 may communicate with the fire suppression unit 506 through fiber optic cables.

To operate the fire suppression unit(s) 506, the control system 602 is configured to send instructions thereto. In particular, the control system 602 is configured to instruct a fire suppression unit 506 to direct its nozzle 604 to the target storage column and to output fire suppressant towards the target storage column. Directing the nozzle 604 to the target storage column may comprise orienting the nozzle 604 towards the target storage column, such that, when fire suppressant is output by the nozzle 604, fire suppressant is delivered into a target storage column. For instance, directing the nozzle 604 to the target storage column may comprise reorienting the nozzle until its line of sight is towards the target storage column. Referring to the depiction of the fire suppression unit shown in Fig. 6, directing the nozzle 604 to the target storage column may comprise rotating the rotatable hub 608a until the nozzle is facing the target storage column.

Outputting fire suppressant towards the target storage column comprises releasing fire suppressant from the nozzle 604 of the fire suppression unit 506 once the nozzle 604 is directed to the target storage column. As an example, the nozzle 506 may release fire suppressant by opening a valve in the fire suppression unit 506. The valve may be disposed in the nozzle 604, or otherwise within a channel between the supply pipe 510 and the nozzle 604. The valve is arranged to selectively isolate a conduit within the fire suppression unit 506 from the environment surrounding the fire suppression unit 506. The valve therefore allows selective delivery of fluid from the fire suppression unit 506 into the environment surrounding the fire suppression unit 506, such as a target storage column. The valve may be arranged to open in response to instructions from the control system 602.

If the fire suppressant is pressurised in the supply pipe 510, the fire suppression unit 506 need not propel the fire suppressant on output. Instead, a valve in the nozzle 604 (for instance) need only open for fluid to be delivered to the target storage column. This enables simpler selective output mechanisms at the fire suppression unit 506, which simplifies the assembly of the fire suppression unit 506 in the grid, thereby simplifying grid manufacture and reducing costs. However, the fire suppression unit 506 may alternatively be configured to propel the fire suppressant on output. The fire suppression unit may include at least one compressor to increase the pressure of the fire suppressant from the supply pipe 510, and thereby propel the fire suppressant. The fire suppression unit may alternatively include a cartridge of propellant (such as nitrogen, air, compressed air, carbon dioxide) which is opened or punctured to increase the pressure of, and propel, the fire suppressant on output.

In some examples, the control system 602 is configured to instruct multiple fire suppression units across the storage system in parallel. For instance, the control system 602 may be configured to instruct each of the multiple fire suppression units to deliver fire suppressant into respective target storage columns. Here, each target storage column may be uniquely targeted by a respective fire suppression unit. Alternatively, the control system 602 may be configured to instruct each of the multiple fire suppression units to deliver fire suppressant into the same target storage column, (e.g., to provide a greater flow rate of fire suppressant into the target storage column). In any of these examples, the control system 602 is configured to instruct each fire suppression units to deliver fire suppressant into the target storage column(s) by instructing each respective fire suppression unit to direct the nozzle to the respective target storage column and to output fire suppressant towards the respective target storage column, as discussed herein with respect to fire suppression unit 506.

The instructions from the control system 602 may include a direction signal and a delivery signal. Accordingly, the control system 602 may be configured to generate the direction signal and the delivery signal, and to transmit the direction signal and the delivery signal to the fire suppression unit 506.

The direction signal communicates the orientation in which the nozzle 604 is to be positioned such that, when fire suppressant is output by the nozzle 604, fire suppressant is delivered into a target storage column. Thus, the direction signal depends on the target storage column. As such, the direction signal may indicate the target storage column, an orientation of the actuatable mount, and/or coordinates at which to aim the nozzle 604. When the direction signal indicates the target storage column, the direction signal may identify an entry in an index stored at the fire suppression unit 506, each entry of the index corresponding to the storage column within range of the fire suppression unit 506.

The delivery signal causes the nozzle 604 to output fire suppressant. The delivery signal may instruct a valve in the fire suppression unit 606 to open. In some examples, the delivery signal may communicate a delay after which, or time at which, the fire suppressant is to be output.

In some examples, the control system 602 may also be in communication with the robots 508 of the storage system. For instance, the control system may be configured to route the robotic vehicle about the plurality of storage columns, as is otherwise described herein. As an example, routing the robotic vehicle about the plurality of storage columns may comprise instructing the robotic vehicle to take a particular route of travel along the grid, e.g., along the rails thereof.

In these examples, the control system 602 may be further configured to route the robotic vehicle 508 away from the target storage column before fire suppressant is output from the fire suppression unit. In other words, the control system 602 may be configured to instruct the fire suppression unit 506 to output fire suppressant towards the target storage column after routing the robotic vehicle 508 away from the target storage column. In some examples, the instructions to output fire suppressant may be sent to the fire suppression unit 506 in parallel with the instructions to the robotic vehicle 508 routing the robotic vehicle 508 away from the target storage column. Here, the instructions to output fire suppressant may include instructions to output fire suppressant after a delay, to allow the robotic vehicle 508 to travel away from the target storage column during the delay. That is, the control system may be configured to route the robotic vehicle away from the target storage column during the delay. Alternatively, the instructions to output fire suppressant may be sent to the fire suppression unit 506 in series with, and subsequently to, the instructions to the robotic vehicle 508 routing the robotic vehicle 508 away from the target storage column. In either case, the effect is that robots 508 are evacuated from the vicinity of the fire suppression unit 508 prior to delivery of fire suppressant, which can prevent the fire suppressant damaging the robots 508.

In some examples, the control system may be part of a user-accessible workstation at a user-accessible location outside the frame. The containers within the columns of the storage system are accessed by robots and are not usually accessible to users. Therefore, the user-accessible location may be away from the storage containers. The user-accessible location may be within the same warehouse as the frame 502. However, the user-accessible location may be at a location remote from the warehouse containing the frame 502. For instance, part of the control system may be implemented in a mobile device to allow user control of the fire suppression unit 506 away from the frame 502. An effect of locating the user-accessible location outside the frame is increased user safety, while still providing manual and specific delivery of fire suppressant from the fire suppression unit 506 to a specific target storage column.

In these examples, and as described with respect to Fig. 4, the control system may further comprise a display device, an input device and at least one processor. The processor is configured to receive, via the input device, a user selection of the target storage column. For instance, the user selection of the target storage column may comprise the selection, on a user interface of the display device, of a storage column in the storage system. The user selection may addition comprise the selection of more than one storage column. Responsive to the user selection, this storage column or these storage columns become the target storage column(s) into which fire suppressant is to be delivered. Alternatively, the user selection of the target storage column may comprise the selection, on the user interface, of a fire suppression unit 506 in the storage system, followed by the manual control of that fire suppression unit 506. The manual control may comprise user inputs to direct the nozzle of the selected fire suppression unit 506 to the target storage column. The manual control may also comprise a user input to output fire suppressant from the nozzle. Accordingly, in these embodiments, the fire suppression unit 506 described herein has the effect of remotely controlled manual fire suppression. In either case, in response to receiving the user selection, the processor may be configured to instruct the fire suppression unit 506 to direct the nozzle to the target storage column and output fire suppressant towards the target storage column, as otherwise described herein.

In some implementations, such as those in which a fire suppression unit 506 can be controlled manually, the fire suppression unit(s) 506 may further include a camera arranged to transmit a video feed to the control system 602. This video feed may be presented on the display device of the control system 602. For instance, the video feed may allow the user to aim the fire suppression unit 506 at the target storage column when manually controlling the fire suppression unit 506. The camera may include an infrared sensor arranged to detect heat to aid the user's control. In some examples the camera may be in communication with a processor arranged to identify a flame in a video or photo feed from the camera using machine vision techniques. For instance, on identification of the flame, an indication of the flame may be provided in the video feed. The indication of the flame signals, to the user, the location of the flame to aid the user's control of the fire suppression unit 506.

In some examples, the storage system also includes a fire detection system 610 in communication with the control system 602. The fire detection system 610 may be local to the storage system, such as a particular section of the frame or of the storage system, or to the warehouse within which the storage system is located. The fire detection system 610 is configured to detect a condition indicative of fire in the storage system or a section of the storage system. For instance, the condition indicative of fire could be the presence of smoke, an elevated temperature, or a flame. The condition indicative of fire can be detected using any suitable means. In some examples, the fire detection system 610 may comprise an aspiration system and detecting the presence of fire may comprise detecting the presence of smoke by, for instance, drawing air from the storage system and testing the drawn air for smoke. Alternatively, the fire detection system 610 may include a device for measuring temperature in the storage system. Alternatively, the fire detection system 610 may comprise a camera in communication with a processor arranged to detect the presence of a flame using machine vision techniques.

When the fire detection system 610 is present, the control system 602 is configured to instruct the fire suppression unit to direct the nozzle 604 to the target storage column and output fire suppressant towards the target storage column in response to the fire detection system 610 detecting a condition indicative of fire in a section of the automated storage and retrieval system. The section of the automated storage and retrieval system in which the condition indicative of fire is detected may comprise the target storage column to which fire suppressant is delivered. However, as discussed in more detail with respect to Figs. 8A-8C, the section in which the condition indicative of fire is detected need not include the target storage column. This section need not include the target storage column if, for instance, the target storage column is provided in a zone comprising a group of consecutively adjacent storage columns which segregate a portion of the storage system (which includes the section of the storage system) from another portion of the storage system because the segregation is arranged to prevent the spread of fire.

In some of these examples, the control system 602 may be modular and/or distributed. For instance, one module may be configured to instruct the fire suppression unit 506. Another module may be configured to receive the video feed from a camera at the fire suppression unit 506. Another module may be configured to route, instruct, or otherwise control the robotic vehicles 508. Another module may be configured to monitor, or receive signals from, the fire detection system 610.

### Method of delivering fire suppressant to a storage system

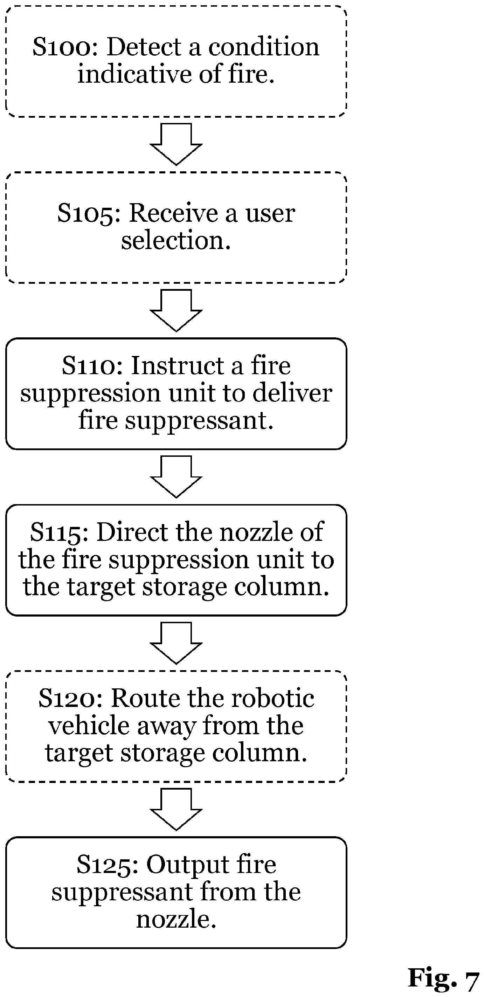

Fig. 7 depicts a flowchart of an example method of delivering fire suppressant to an automated storage and retrieval system, such as the automated storage and retrieval system described with respect to Fig. 1. As described herein, the fire suppressant may be delivered to the automated storage and retrieval system using a fire suppression unit 506 such as described with respect to Figs. 5A-6. Any of the steps of the method which are depicted as carried out sequentially may be carried out in series, in any order, unless otherwise causally linked. Any steps depicted as dashed or dotted flowchart boxes are optional.

At step S100 a condition indicative of fire may be detected in the storage and retrieval system, or a section thereof. The condition indicative of fire may be detected by a fire detection system, such as the fire detection system described with respect to Fig. 6. For instance, detecting the condition indicative of fire may include any of: detecting smoke in the air of the storage system, or the section thereof; detecting an elevated temperature in the storage system, or the section thereof; and/or detecting the presence of a flame in the storage system, or the section thereof using machine vision techniques.

The section of the storage system in which the condition indicative of fire is detected may include a target storage column into which fire suppressant is to be delivered. However, as discussed in more detail with respect to Figs. 6 and 8A-8C, the section need not include the target storage column.

At step S105, a user selection may be received. The user selection may be of a target storage column of the storage system, as described in more detail with respect to Figs. 5A-6. As further described herein, the user selection may be received at a user-accessible workstation and may be via an input device of the user-accessible workstation. The user selection may comprise a selection on the display device of a storage column or the coordinates thereof. The user selection may include the selection of more than one storage column. Alternatively, the user selection may comprise manually controlling the fire suppression unit 506 to direct a nozzle of the selected fire suppression unit 506 to the target storage column. As depicted in Fig. 7, step S105 may be carried out sequentially after step S100. However, steps S100 and S105 may alternatively be carried out in parallel, or step S100 may be carried out sequentially before step S105.

At step S110, the fire suppression unit is instructed to deliver fire suppressant. For instance, as described in more detail with respect to Figs. 5A-6, the fire suppression unit is instructed to deliver fire suppressant to a target storage column. As described with respect to Fig. 6, a control system may instruct the fire suppression unit, and the instructions from the control system may include a direction and a delivery signal. Instructing the fire suppression unit comprises sending instructions to the fire suppression unit.

At step S115, the nozzle of the fire suppression unit is directed to the target storage column. Step S115 is carried out responsive to the fire suppression unit receiving instructions in step S110. Directing the nozzle to the target storage column may comprise orienting the nozzle towards the target storage column. By orienting the nozzle towards the target storage column, fire suppressant can be delivered into a target storage column when fire suppressant is output by the nozzle 604. For instance, directing the nozzle 604 to the target storage column may comprise reorienting the nozzle until its line of sight is towards the target storage column. Referring to the depiction of the fire suppression unit shown in Fig. 6, directing the nozzle 604 to the target storage column may comprise rotating the rotatable hub 608a until the nozzle is facing the target storage column.

At step S120, a robotic vehicle may be routed away from the target storage column. For instance, as described with respect to Fig. 6, the control system may be further configured to route the robotic vehicle about the storage column. Accordingly, the control system may route the robotic vehicle away from the target storage column. Routing the robotic vehicle about the plurality of storage columns may comprise instructing the robotic vehicle to take a particular route of travel along the grid defining the storage columns, e.g., alone the rails thereof. These instructions may be generated by the control system and/or transmitted from the control system to the robotic vehicle.

At step S125, fire suppressant is output from the nozzle of the fire suppression unit. Step S125 is carried out responsive to the fire suppression unit receiving instructions in step S110 and to nozzle being directed to the target storage column in step S115. As discussed with respect to Figs. 5A-6, outputting fire suppressant from the fire suppression unit may comprise releasing fire suppressant from the nozzle. For example, releasing fire suppressant from the nozzle may comprise opening a valve disposed in the nozzle of or a channel in or about the fire suppression unit. As a result of outputting fire suppressant from the nozzle of the fire suppression unit after the nozzle is directed to the target storage column, fire suppressant is delivered to the target storage column.

As depicted in Fig. 7, step S120 may be carried out sequentially after steps S100-S115. However, any of steps S100-S115 - particularly steps S110 and S115 - may alternatively be carried out in parallel with, or any of steps S100-S115 - particularly steps S110 and S115 - may be carried out sequentially after step S120. For instance, the control system may route the robotic vehicle away from the target storage column in step S110 in parallel with instructing the fire suppression unit to deliver fire suppressant in step S120. Similarly, the control system may route the robotic vehicle away from the target storage column in step S110 prior to instructing the fire suppression unit to deliver fire suppressant in step S120. In addition, step S125 is depicted sequentially after step S120. Accordingly, if step S110 is provided before step S120, step S110 may include instructing the fire suppression unit to deliver the fire suppressant to the target storage column after routing the robotic vehicle away from the target storage column in step S120. Alternatively, if step S110 is provided after step S120, the fire suppression unit is equally instructed to deliver the fire suppressant to the target storage column after routing the robotic vehicle away from the target storage column.

### Zones for accumulating fire suppressant

In some of the example systems and methods discussed herein, particularly with respect to Figs. 5A-7, at least one storage column of the plurality of storage columns of the grid may designate a zone of the storage system. The zone is configured to accumulate the fire suppressant. For instance, the zone may be configured to accumulate the fire suppressant output from the fire suppression unit. In these, examples, the at least one storage column designating the zone comprises the target storage column otherwise discussed herein.

Storage columns may be considered to designate the zone by bounding, defining, demarcating, or otherwise setting the limits of the zone. For instance, the zone may be provided by the cumulative internal storage space of all the respective storage columns. The zone may be provided by a fringe between multiple storage columns, in which case the target storage column includes the fringe thereof and delivering fire suppressant into the target storage column includes delivering the fire suppressant into the target storage column's fringe. The zone may also be provided by the cumulative internal storage space of all the respective storage columns and their shared fringes. In some examples, the zone is designated by a plurality of storage columns, such as a plurality of consecutively adjacent storage columns. The storage columns may be a contiguous plurality of storage columns. Alternatively, the zone may be designated by only one storage column.

A zone may be configured to accumulate the fire suppressant output from the fire suppression unit if the internal volume of the zone (i.e., the area of the zone within the grid of the storage system) is configured to retain fire suppressant. For instance, the zone may be configured to accumulate the fire suppressant if the delivered rate of fire suppressant into the zone is faster than the discharge (e.g., leak) rate of fire suppressant out of the zone. In some examples, the discharge rate of fire suppressant is minimised and may be substantially zero. The discharge rate of fire suppressant is substantially zero if fluid cannot leak out of the internal volume of the zone, for instance if the internal volume of the zone is at least substantially fluidically disconnected (e.g., isolated) from the other internal portions of the grid.

Figs. 8A-C show top views 800a, 800b, 800c of the system of Fig. 1 shown in Fig. 2, annotated to with example zones 802a, 802b, 802c for accumulating fire suppressant. As shown, the zones 802a, 802b, 802c may comprise more than one storage column. In these examples, fire suppressant can be delivered to the more than one storage column by one or more fire suppression units, as described herein. In some examples, one fire suppression unit may fill all the storage columns of one zone. For example, the fire suppression unit may be arranged to sequentially fill each storage column. In other examples, multiple fire suppression units may respectively fill storage columns of the zone. In some examples, one fire suppression unit may fill multiple storage columns of the zone by delivering fire suppressant to a target storage column arranged such that fire suppressant can flow from the target storage column to its neighbouring storage columns. The columns of the zone may each fill at substantially the same rate.

Fig. 8A, shows top view 800a in which a zone 802a configured to accumulate the fire suppressant is designated by storage columns. The columns may be consecutively adjacent and may form a contiguous volume. As shown, the consecutively adjacent columns shown in Fig. 8a may not include a void. The zone 802a depicted in Fig. 8A is designated by 9 columns, arranged - in top view - as a square. However, in other examples, the consecutively adjacent storage columns may include any number of storage columns and may take substantially any shape in top view (e.g., rectangular or any other compound rectilinear shape). In some examples, the zone 802a is designated by only one storage column.

When fire suppressant is accumulated within the storage columns of the zone 802a, the fire suppressant isolates the contents of the zone 802a from the rest of the storage grid 804a. The rest of the storage grid 804a may comprise additional zones to zone 802a, each of which may be arranged in any suitable manner, such as any of the manners described herein. Accordingly, the zone 802a may be a zone of the grid particularly suited for storing flammable goods. For instance, the zone 802a may be arranged or designated to hold stacks of containers storing flammable goods. As used herein, goods are considered flammable if they have a flash point less than 50°C above the ambient temperature in the automated storage and retrieval system, or if their flash point is at or below 60°C, at or below 50°C, at or below 40°C, or at or below 30°C. Flammable goods are at higher risk of combustion than less flammable goods and therefore the zone 802a may provide an additional safety measure against fire, by providing a quicker and more targeted response to isolate a fire from spreading from a zone 802a to the rest of the storage grid 804a. In addition, by providing fire to the zone 802a, goods stored in the rest of the storage grid 804a can be prevented from damage, either by fire or by fire suppressant.

Figs. 8B and 8C, show top views 800b, 800c in which zones 802b, 802c configured to accumulate the fire suppressant comprise consecutively adjacent storage columns which respectively segregate a (first) portion 806b, 806c of the storage system from another (second) portion 808b, 808c of the storage system. As such, when fire suppressant is accumulated therein, the zones 802b, 802c may act as a blockade to prevent the spread of fire from the first portion 806b, 806c of the storage system to the second portion 808b, 808c of the storage system. In these examples, some or all of the storage columns designating the zones may not contain storage containers.

Accordingly, on the detection of fire in the first portion 806b, 806c, fire suppressant may be accumulated in the zone 802b, 802c, thereby preventing or slowing the spread of fire into the second portion. Subsequently, any suitable fire suppression means (such as, but not limited to, those described herein) may be used to suppress the fire in the first zone. Accordingly, goods stored in the second portion 808b, 808c can be prevented from being damaged, either by fire or by the fire suppression means used on the first portion 806b, 806c.

In some examples, the first portion 806b, 806c of the storage system may be particularly suited for storing flammable goods. For instance, the first portion 806b, 806c may include storage columns arranged or designated to hold stacks of containers storing flammable goods. Accordingly, segregating the first portion 806b, 806c of the storage system from the second portion 808b, 808c of the storage system by a zone of storage columns accumulating fire suppressant provides an additional safety measure against fire, by limiting the spread of fire from the first portion 806b, 806c from the second portion 808b, 808c.

As described with respect to Fig. 6, the storage system may further comprise a fire detection system arranged to detect a condition indicative of fire in a section of the storage system. When the storage columns designate zones 802a, 802b, 802c configured to accumulate the fire suppressant, the section of the storage system within which the fire detection system is arranged to detect a condition indicative of fire may include or be the zones 802a, 802b, 802c. Accordingly, fire suppressant can be targeted to the zones containing the condition indicative of fire, allowing for quick response fire suppression.

Equally, when the zones 802b, 802c comprise consecutively adjacent storage columns which respectively segregate a first portion 806b, 806c of the storage system from a second portion 808b, 808c of the storage system, the section of the storage system within which the fire detection system is arranged to detect a condition indicative of fire may be or be contained within the first portion 806b, 806c. Accordingly, the zones can segregate the section of the storage system containing the condition indicative of fire from other parts of the storage system, thereby containing the fire.

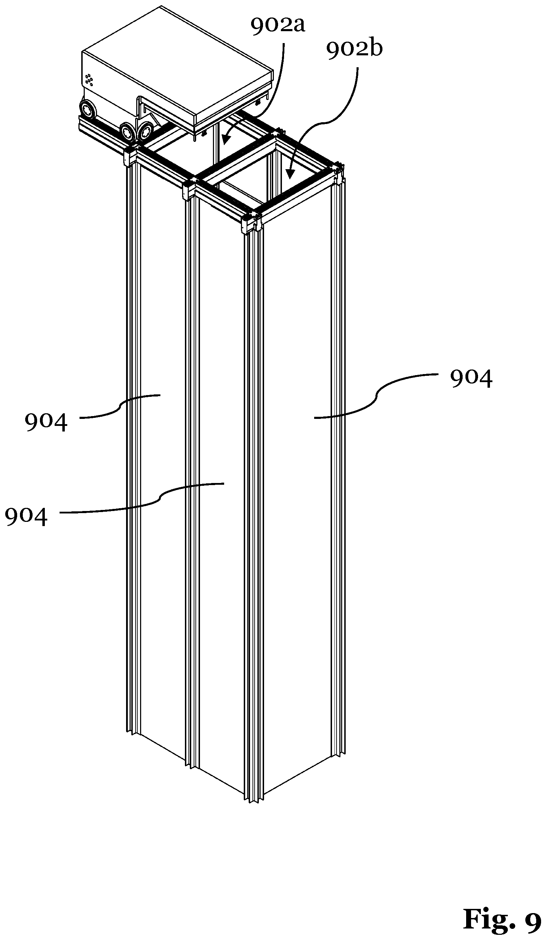

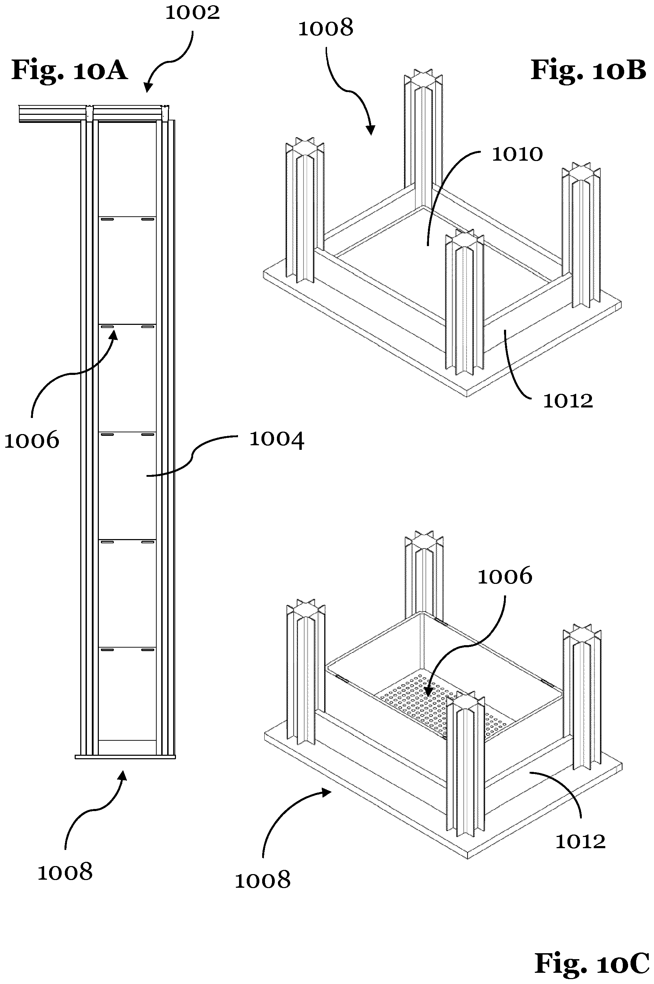

Figs. 9 and 10A-C show storage columns with example means by which the columns of the zones 800a, 800b, 800c may be configured to accumulate the fire suppressant.

Fig. 9 shows two storage columns 902a, 902b within which fire suppressant can accumulate. As shown, the storage columns may include at least one barrier 904 to at least substantially fluidically disconnect (e.g., isolated) the inside of the storage column from other internal portions of the grid.

The barrier may be provided in any combination of the lateral sides of a storage column. The lateral sides are lateral with respect to the top view and may be the elongate sides. For instance, storage columns 902a and 902b each include barriers on three of their lateral sides, but not on their shared side. Accordingly, fire suppressant can flow from storage column 902a to storage column 902b (its neighbouring storage column) through their shared open side.

Accordingly, the barrier 904 in Fig. 9 may at least substantially fluidically disconnect (e.g., isolated) the inside of the storage column from the other internal portions of the grid such that fire suppressant can be accumulated inside the storage column. Alternatively, the barrier may define the inner boundary of the storage column fringe. Therefore, two neighbouring storage columns may include two barriers at their shared edge, the two barriers being separated by the fringes of each storage column. In these examples, fire suppressant may be accumulated inside fringes, between the two barriers, in which case fire suppressant need not be accumulated inside the storage columns.

The barriers 904 may include any suitable material impermeable to fire suppressant. For instance, the barrier 904 may be formed of the same material as the grid elements. The barrier 904 may be metal, such as aluminium or extruded aluminium.

Figs. 10A-C includes a storage column 1002 containing a stack of storage containers, within which fire suppressant can accumulate. As shown, openings or holes 1006 are provided in a base of each storage container. Accordingly, when fire suppressant is delivered into the uppermost storage container, gravity causes the fire suppressant to flow through the holes of the uppermost and each sequential storage container to the base 1008 of the grid. The stack of storage containers may be substantially fluid tight such that fire suppressant accumulates in the storage column. As used herein, the stack of storage containers may be considered substantially fluid tight if the delivered rate of fire suppressant into the top container is faster the discharge (e.g., leak) rate of fire suppressant out of the stack of storage containers. Therefore, when fire suppressant is delivered into the uppermost storage container, the fire suppressant accumulates in the storage column. Fire suppressant may therefore accumulate in a storage column, even when storage containers are present in the storage column.

As shown in Fig. 10B, the storage column includes an impermeable base plate 1010 configured to seal the openings 1006 of the lowermost storage container in the stack of storage containers. The impermeable base plate can therefore prevent or reduce leakage of fire suppressant from the bottom storage container. In some examples, the impermeable base plate is compressible. In these examples, the base plate may compress under the weight of the stack of storage containers, such that the base plate is deformed to plug the openings 1006 under the weight of the container stack and/or fire suppressant to plug the openings. In other examples, the base plate is not compressible and the lowmost storage container is sealed by proximity to the openings. As shown in Figs. 10B and 10C the storage column may also include flanges 1012 at the base plate to retain the lowermost storage container in the storage column. Here, the flanges 1012 may be provided on any or all edges of the storage column. The flanges 1012 may be positioned to be flush against the storage container. Accordingly, the flanges 1012 may help prevent or reduce fire suppressant leakage from the bottom storage container by their proximity to the bottom storage container. In some examples, the flanges 1012 may be provide by the barriers 904 discussed with respect to Fig. 9.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further, the disclosure includes the following clauses:
Clause 1. An automated storage and retrieval system comprising:
   a frame defining a plurality of storage columns for receiving stacks of storage containers;
   a fire suppression unit positioned to deliver fire suppressant into at least a subset of storage columns of the plurality of storage columns, the fire suppression unit comprising a nozzle for outputting the fire suppressant and an actuatable mount for directing the nozzle to a target storage column,
   a control system configured to instruct the fire suppression unit to direct the nozzle to the target storage column and to output fire suppressant towards the target storage column.
Clause 2. The automated storage and retrieval system of clause 1, further comprising a robotic vehicle configured to transport containers between the plurality of storage columns, wherein the control system is further configured to route the robotic vehicle about the plurality of storage columns.
Clause 3. The automated storage and retrieval system of clause 2, wherein the control system is further configured to instruct the fire suppression unit to output fire suppressant towards the target storage column after routing the robotic vehicle away from the target storage column.
Clause 4. The automated storage and retrieval system of any previous clause, wherein the control system comprises a user-accessible workstation disposed at a user-accessible location outside the frame.
Clause 5. The automated storage and retrieval system of clause 4, wherein the user-accessible workstation comprises:
   a display device,
   an input device, and
   at least one processor configured to:
      receive, via the input device, a user selection of the target storage column; and
      instruct the fire suppression unit to direct the nozzle to the target storage column and output fire suppressant towards the target storage column in response to receiving the user selection.
Clause 6. The automated storage and retrieval system of any previous clause, further comprising a fire detection system in communication with the control system, wherein the control system is configured to instruct the fire suppression unit to direct the nozzle to the target storage column and output fire suppressant towards the target storage column in response to the fire detection system detecting a condition indicative of fire in a section of the automated storage and retrieval system.
Clause 7. The automated storage and retrieval system of clause 6, wherein the section of the automated storage and retrieval system includes the target storage column.
Clause 8. The automated storage and retrieval system of any previous clause, wherein the actuatable mount comprises a rotatable hub and at least one arm, each arm being attached, at its proximal end, to the nozzle and, at its distal end, to the rotatable hub.
Clause 9. The automated storage and retrieval system of clause 8, wherein each arm is attached to the nozzle via a rotatable strut, and an axis of rotation of the rotatable strut is perpendicular to an axis of rotation of the rotatable hub.
Clause 10. The automated storage and retrieval system of any previous clause, wherein the fire suppression unit is positioned above an edge between two storage columns in a stacking direction of the two storage columns.
Clause 11. The automated storage and retrieval system of clause 10, further comprising a supply pipe configured to supply the fire suppressant to the fire suppression unit, wherein at least a portion of the supply pipe is parallel to the edge between two storage columns.
Clause 12. The automated storage and retrieval system of any previous clause, wherein at least one storage column of the plurality of storage columns designates a zone configured to accumulate the fire suppressant output from the fire suppression unit, the at least one storage column comprising the target storage column.
Clause 13. The automated storage and retrieval system of clause 12, wherein the zone comprises a group of consecutively adjacent storage columns which segregate a portion of the automated storage and retrieval system from another portion of the automated storage and retrieval system.
Clause 14. A method of delivering fire suppressant to an automated storage and retrieval system comprising a frame defining a plurality of storage columns for receiving stacks of storage containers and a fire suppression unit comprising a nozzle and an actuatable mount, the method comprising:
   instructing, by a control system of the automated storage and retrieval system, the fire suppression unit to deliver fire suppressant to a target storage column,
   directing the nozzle to the target storage column; and
   outputting the fire suppressant from the nozzle.
Clause 15. The method of clause 14, further comprising:
   routing, by the control system, a robotic vehicle configured to transport containers between the plurality of storage columns away from the target storage column,
   wherein the control system is configured to instruct the fire suppression unit to deliver the fire suppressant to the target storage column after routing the robotic vehicle away from the target storage column.
Clause 16. The method of clause 14 or clause 15, wherein the control system comprises a user-accessible workstation disposed at a user-accessible location outside the frame and the method further comprises:
   prior to instructing the fire suppression unit to deliver the fire suppressant to the target storage column, receiving, at the user-accessible workstation via an input device of the user-accessible workstation, a user selection of the target storage column.
Clause 17. The method of any of clauses 14-16, wherein the automated storage and retrieval system further comprises a fire detection system in communication with the control system and the method further comprises:
   instructing the fire suppression unit to deliver the fire suppressant to the target storage column in response to detecting, by the fire detection system, a condition indicative of fire in a section of the automated storage and retrieval system.
Clause 18. The method of clause 17, wherein the section of the automated storage and retrieval system includes the target storage column.
Clause 19. The method of any of clauses 14-18, wherein at least one storage column of the plurality of storage columns designates a zone configured to accumulate the fire suppressant upon delivery from the fire suppression unit, the at least one storage column comprising the target storage column, wherein the method further comprises:
   delivering the fire suppressant to each storage column of the at least one storage column.
Clause 20. The method of clause 19, wherein the zone comprises a group of consecutively adjacent storage columns which segregate a portion of the automated storage and retrieval system from another portion of the automated storage and retrieval system.
Clause 21. A computer-readable medium comprising instructions which, when executed by a processor of a device, cause the device to perform the method of any of clauses 14-20.

## Claims

1. An automated storage and retrieval system comprising:
a frame defining a plurality of storage columns for receiving stacks of storage containers;
a fire suppression unit positioned to deliver fire suppressant into at least a subset of storage columns of the plurality of storage columns, the fire suppression unit comprising a nozzle for outputting the fire suppressant and an actuatable mount for directing the nozzle to a target storage column,
a control system configured to instruct the fire suppression unit to direct the nozzle to the target storage column and to output fire suppressant towards the target storage column.

2. The automated storage and retrieval system of claim 1, further comprising a robotic vehicle configured to transport containers between the plurality of storage columns, wherein the control system is further configured to route the robotic vehicle about the plurality of storage columns, and wherein the control system is further configured to instruct the fire suppression unit to output fire suppressant towards the target storage column after routing the robotic vehicle away from the target storage column.

3. The automated storage and retrieval system of claim 1 or 2, wherein the control system comprises a user-accessible workstation disposed at a user-accessible location outside the frame, optionally wherein the user-accessible workstation comprises:
a display device,
an input device, and
at least one processor configured to:
receive, via the input device, a user selection of the target storage column; and
instruct the fire suppression unit to direct the nozzle to the target storage column and output fire suppressant towards the target storage column in response to receiving the user selection.

4. The automated storage and retrieval system of any previous claim, further comprising a fire detection system in communication with the control system, wherein the control system is configured to instruct the fire suppression unit to direct the nozzle to the target storage column and output fire suppressant towards the target storage column in response to the fire detection system detecting a condition indicative of fire in a section of the automated storage and retrieval system, optionally wherein the section of the automated storage and retrieval system includes the target storage column.

5. The automated storage and retrieval system of any previous claim, wherein the actuatable mount comprises a rotatable hub and at least one arm, each arm being attached, at its proximal end, to the nozzle and, at its distal end, to the rotatable hub, optionally wherein each arm is attached to the nozzle via a rotatable strut, and an axis of rotation of the rotatable strut is perpendicular to an axis of rotation of the rotatable hub.

6. The automated storage and retrieval system of any previous claim, wherein the fire suppression unit is positioned above an edge between two storage columns in a stacking direction of the two storage columns, the automated storage and retrieval system optionally further comprising a supply pipe configured to supply the fire suppressant to the fire suppression unit, wherein at least a portion of the supply pipe is parallel to the edge between two storage columns.

7. The automated storage and retrieval system of any previous claim, wherein at least one storage column of the plurality of storage columns designates a zone configured to accumulate the fire suppressant output from the fire suppression unit, the at least one storage column comprising the target storage column.

8. The automated storage and retrieval system of claim 7, wherein the zone comprises a group of consecutively adjacent storage columns which segregate a portion of the automated storage and retrieval system from another portion of the automated storage and retrieval system.

9. A method of delivering fire suppressant to an automated storage and retrieval system comprising a frame defining a plurality of storage columns for receiving stacks of storage containers and a fire suppression unit comprising a nozzle and an actuatable mount, the method comprising:
instructing, by a control system of the automated storage and retrieval system, the fire suppression unit to deliver fire suppressant to a target storage column,
directing the nozzle to the target storage column; and
outputting the fire suppressant from the nozzle.

10. The method of claim 9, further comprising:
routing, by the control system, a robotic vehicle configured to transport containers between the plurality of storage columns away from the target storage column,
wherein the control system is configured to instruct the fire suppression unit to deliver the fire suppressant to the target storage column after routing the robotic vehicle away from the target storage column.

11. The method of claim 9 or claim 10, wherein the control system comprises a user-accessible workstation disposed at a user-accessible location outside the frame and the method further comprises:
prior to instructing the fire suppression unit to deliver the fire suppressant to the target storage column, receiving, at the user-accessible workstation via an input device of the user-accessible workstation, a user selection of the target storage column.

12. The method of any of claims 9-11, wherein the automated storage and retrieval system further comprises a fire detection system in communication with the control system and the method further comprises:
instructing the fire suppression unit to deliver the fire suppressant to the target storage column in response to detecting, by the fire detection system, a condition indicative of fire in a section of the automated storage and retrieval system,
optionally wherein the section of the automated storage and retrieval system includes the target storage column.

13. The method of any of claims 9-12, wherein at least one storage column of the plurality of storage columns designates a zone configured to accumulate the fire suppressant upon delivery from the fire suppression unit, the at least one storage column comprising the target storage column, wherein the method further comprises:
delivering the fire suppressant to each storage column of the at least one storage column.

14. The method of claim 13, wherein the zone comprises a group of consecutively adjacent storage columns which segregate a portion of the automated storage and retrieval system from another portion of the automated storage and retrieval system.

15. A computer-readable medium comprising instructions which, when executed by a processor of a device, cause the device to perform the method of any of claims 9-14.

## Amended claims

### Amended claims in accordance with Rule 137(2) EPC.

1. An automated storage and retrieval system comprising:
a frame (502) defining a plurality of storage columns for receiving stacks of storage containers;
a fire suppression unit (506) positioned to deliver fire suppressant into at least a subset of storage columns of the plurality of storage columns, the fire suppression unit (506) comprising a nozzle (604) for outputting the fire suppressant and an actuatable mount (606) for directing the nozzle (604) to a target storage column;
a control system (602) configured to instruct the fire suppression unit (506) to direct the nozzle (604) to the target storage column and to output fire suppressant towards the target storage column; and
a robotic vehicle (508) configured to transport containers between the plurality of storage columns,
wherein the control system (602) is further configured to route the robotic vehicle (508) about the plurality of storage columns, and
wherein the control system (602) is further configured to instruct the fire suppression unit (506) to output fire suppressant towards the target storage column after routing the robotic vehicle (508) away from the target storage column.

2. The automated storage and retrieval system of claim 1, wherein the control system (602) comprises a user-accessible workstation disposed at a user-accessible location outside the frame (502), optionally wherein the user-accessible workstation comprises:
a display device,
an input device, and
at least one processor configured to:
receive, via the input device, a user selection of the target storage column; and
instruct the fire suppression unit (506) to direct the nozzle (604) to the target storage column and output fire suppressant towards the target storage column in response to receiving the user selection.

3. The automated storage and retrieval system of any previous claim, further comprising a fire detection system in communication with the control system (602), wherein the control system (602) is configured to instruct the fire suppression unit (506) to direct the nozzle (604) to the target storage column and output fire suppressant towards the target storage column in response to the fire detection system detecting a condition indicative of fire in a section of the automated storage and retrieval system, optionally wherein the section of the automated storage and retrieval system includes the target storage column.

4. The automated storage and retrieval system of any previous claim, wherein the actuatable mount (606) comprises a rotatable hub and at least one arm, each arm being attached, at its proximal end, to the nozzle (604) and, at its distal end, to the rotatable hub, optionally wherein each arm is attached to the nozzle (604) via a rotatable strut, and an axis of rotation of the rotatable strut is perpendicular to an axis of rotation of the rotatable hub.

5. The automated storage and retrieval system of any previous claim, wherein the fire suppression unit (506) is positioned above an edge between two storage columns in a stacking direction of the two storage columns, the automated storage and retrieval system optionally further comprising a supply pipe configured to supply the fire suppressant to the fire suppression unit (506), wherein at least a portion of the supply pipe is parallel to the edge between two storage columns.

6. The automated storage and retrieval system of any previous claim, wherein at least one storage column of the plurality of storage columns designates a zone configured to accumulate the fire suppressant output from the fire suppression unit (506), the at least one storage column comprising the target storage column.

7. The automated storage and retrieval system of claim 6, wherein the zone comprises a group of consecutively adjacent storage columns which segregate a portion of the automated storage and retrieval system from another portion of the automated storage and retrieval system.

8. A method of delivering fire suppressant to an automated storage and retrieval system comprising a frame (502) defining a plurality of storage columns for receiving stacks of storage containers and a fire suppression unit (506) comprising a nozzle (604) and an actuatable mount (606), the method comprising:
instructing, by a control system (602) of the automated storage and retrieval system, the fire suppression unit (506) to deliver fire suppressant to a target storage column;
directing the nozzle (604) to the target storage column;
outputting the fire suppressant from the nozzle (604); and
routing, by the control system (602), a robotic vehicle (508) configured to transport containers between the plurality of storage columns away from the target storage column,
wherein the control system (602) is configured to instruct the fire suppression unit (506) to deliver the fire suppressant to the target storage column after routing the robotic vehicle (508) away from the target storage column.

9. The method of claim 8, wherein the control system (602) comprises a user-accessible workstation disposed at a user-accessible location outside the frame (502) and the method further comprises:
prior to instructing the fire suppression unit (506) to deliver the fire suppressant to the target storage column, receiving, at the user-accessible workstation via an input device of the user-accessible workstation, a user selection of the target storage column.

10. The method of claim 8 or claim 9, wherein the automated storage and retrieval system further comprises a fire detection system in communication with the control system (602) and the method further comprises:
instructing the fire suppression unit (506) to deliver the fire suppressant to the target storage column in response to detecting, by the fire detection system, a condition indicative of fire in a section of the automated storage and retrieval system,
optionally wherein the section of the automated storage and retrieval system includes the target storage column.

11. The method of any of claims 8-10, wherein at least one storage column of the plurality of storage columns designates a zone configured to accumulate the fire suppressant upon delivery from the fire suppression unit (506), the at least one storage column comprising the target storage column, wherein the method further comprises:
delivering the fire suppressant to each storage column of the at least one storage column.

12. The method of claim 11, wherein the zone comprises a group of consecutively adjacent storage columns which segregate a portion of the automated storage and retrieval system from another portion of the automated storage and retrieval system.

13. A computer-readable medium comprising instructions which, when executed by a processor of a device, cause the device to perform the method of any of claims 8-12.
